# EUROPÄISCHE PATENTSCHRIFT

(11) **EP 0 688 709 B1**
(45) Veröffentlichungstag und Bekanntmachung des Hinweises auf die Patenterteilung: **07.04.1999**
(21) Anmeldenummer: 95110878.6
(22) Anmeldetag: 16.10.1993
(51) Int. Cl.: B60T 13/72, B60T 13/57

(54) **Unterdruckbremskraftverstärker für Kraftfahrzeuge**
Vacuum brake booster for motor vehicles
Amplificateur de force de freinage à vide pour véhicules automobiles

(30) Priorität: 13.11.1992 DE 4238333; 23.07.1993 DE 4324688
(43) Veröffentlichungstag der Anmeldung: 27.12.1995
(62) Teilanmeldung aus: 93923478.7
(73) Patentinhaber: Continental Teves AG & Co. oHG, 60488 Frankfurt (DE)
(72) Erfinder: Harth, Ralf, D-64297 Darmstadt (DE); von Hayn, Holger, D-61118 Bad Vilbel (DE); Schonlau, Jürgen, D-65396 Walluf (DE); Zingel, Heinz, D-65520 Bad Camberg (DE); Ritter, Wolfgang, D-61440 Oberursel (DE)

(56) Entgegenhaltungen:
- EP-A- 0 140 187
- EP-A- 0 478 396
- US-A- 4 608 825

## Beschreibung

Die Erfindung betrifft einen Unterdruckbremskraftverstärker für Kraftfahrzeuge mit einem Verstärkergehäuse, dessen Innenraum durch eine bewegliche Wand in eine Unterdruckkammer und eine Arbeitskammer unterteilt ist, sowie mit einem die bewegliche Wand tragenden Steuergehäuse, in dem ein eine auf die bewegliche Wand einwirkende Druckdifferenz steuerndes Steuerventil angeordnet ist, das mindestens zwei mit einem elastischen Ventilkörper zusammenwirkende Dichtsitze aufweist, und einerseits durch eine Betätigungsstange und andererseits unabhängig von der Betätigungsstange durch einen Elektromagneten betätigbar ist, dessen Anker kraftübertragend mit einem der Dichtsitze zusammenwirkt, wobei elektrische Schaltmittel vorgesehen sind, deren Steuersignale ein Abschalten der Stromzufuhr des Elektromagneten ermöglichen.

Ein derartiger Unterdruckbremskraftverstärker ist z.B. aus der europäischen Patentanmeldung 0 478 396 A1 bekannt. Der Elektromagnet, der den Dichtsitz betätigt, dessen Abheben vom Ventilkörper eine Belüftung der Arkeitskammer ermöglicht, ist bei einer Ausführung des darin gezeigten Bremskraftverstärkers außerhalb des Steuergehäuses auf der Betätigungsstange angeordnet. Für den Betrieb des vorbekannten Bremskraftverstärkers sind jedoch auch elektrische Schaltmittel erforderlich, die ein kontrolliertes Einleiten eines Fremdbremsvorgangs sowie dessen Unterbrechen bzw. Beenden ermöglichen. Dem Offenbarungsgehalt der erwähnten Veröffentlichung sind jedoch keine Angaben über die Anordnung bzw. die Art der Betätigung der elektrischen Schaltmittel zu entnehmen.

Es ist daher Aufgabe der vorliegenden Erfindung, Maßnahmen vorzuschlagen, die unter Beibehaltung der platzsparenden Bauweise eine aktive Überwachung des Betriebsmodus des Bremskraftverstärkers ermöglichen. Außerdem soll sichergestellt werden, daß die Fremdbetätigung des elektromagnetisch ansteuerbaren Bremskraftverstärkers, insbesondere nach einer bereits durchgeführten, fremdkraftunterstützten Bremsung, tatsächlich beendet wird.

Diese Aufgabe wird erfindungsgemäß dadurch gelöst, daß die Schaltmittel innerhalb des Verstärkergehäuses angeordnet sind und durch eine Relativbewegung zwischen dem Ventilkolben und dem Steuergehäuse betätigbar sind.

Die Schaltmittel sind vorzugsweise durch einen am Ventilkolben angeordneten Mikroschalter sowie ein am bzw. im Steuergehäuse angeordneten Betätigungselement gebildet.

Dabei ist es besonders vorteilhaft, wenn das Betätigungselement gegenüber dem Steuergehäuse relativ bewegbar und entgegen der Betätigungsrichtung federnd vorgespannt angeordnet ist. Das Betätigungselement liegt unter der Vorspannung einer Druckfeder an einem verstärkergehäusefesten Anschlag so an, daß an seinem dem Mikroschalter zugewandten Ende zwischen ihm und dem Steuergehäuse ein axiales Spiel vorhanden ist.

Ein wirksamer Toleranzausgleich am Betätigungselement wird bei einer weiteren vorteilhaften Ausgestaltung der Erfindung dadurch erreicht, daß das Betätigungselement durch zwei teleskopartig ineinander geführte, federnd vorgespannte Teile, insbesondere durch einen im Steuergehäuse abgedichtet geführten, mit dem Anschlag zusammenwirkenden Betätigungsstößel sowie eine am Betätigungsstößel federnd vorgespannt gefesselte, koaxial zum Betätigungsstößel angeordnete, mit dem Mikroschalter zusammenwirkenden Hülse gebildet ist. Außerdem wird durch diese Maßnahme eine Beschädigung des Mikroschalters wirksam verhindert.

Die Erfindung wird in der nachfolgenden Beschreibung an einem Ausführungsbeispiel im Zusammenhang mit der beiliegenden Zeichnung näher erläutert. In der Zeichnung zeigt:
- Fig. 1: eine Ausführung des erfindungsgemäßen Unterdruckbremskraftverstärkers im Längsschnitt, teilweise weggebrochen; und
- Fig. 2: die einzelnen Betätigungsphasen des in Fig. 1 dargestellten erfindungsgemäßen Unterdruckbremskraftverstärkers.

Das lediglich schematisch angedeutete Verstärkergehäuse 1 des in der Zeichnung dargestellten erfindungsgemäßen Unterdruckbremskraftverstärkers ist durch eine axial bewegliche Wand 2 in eine Arbeitskammer 3 und eine Unterdruckkammer 4 unterteilt. Die axial bewegliche Wand 2 besteht aus einem aus Blech tiefgezogenen Membranteller 8 und einer daran anliegenden flexiblen Membran 18, die nicht näher dargestellt zwischen dem äußeren Umfang des Membrantellers 8 und dem Verstärkergehäuse 1 eine Rollmembran als Abdichtung bildet.

Ein durch eine Betätigungsstange 7 betätigbares Steuerventil 12 ist in einem im Verstärkergehäuse 1 abgedichtet geführten, die bewegliche Wand 2 tragenden Steuergehäuse 5 untergebracht und besteht aus einem am Steuergehäuse 5 ausgebildeten ersten Dichtsitz 15, einem an einem mit der Betätigungsstange 7 verbundenen Ventilkolben 9 ausgebildeten zweiten Dichtsitz 16 sowie einem mit beiden Dichtsitzen 15,16 zusammenwirkenden Ventilkörper 10, der mittels einer sich an einem Haltering 21 abstützenden Ventilfeder 22 gegen die Ventilsitze 15,16 gedrückt wird. Die Arbeitskammer 3 ist mit der Unterdruckkammer 4 über einen seitlich im Steuergehäuse 5 verlaufenden Kanal 28 verbindbar.

Die Bremskraft wird über eine stirnseitig am Steuergehäuse 5 anliegende gummielastische Reaktionsscheibe 6 sowie eine einen Kopfflansch 23 aufweisende Druckstange 14 auf einen Betätigungskolben eines nicht dargestellten Hauptzylinders der Bremsanlage übertragen, der an der unterdruckseitigen, nicht gezeigten Verstärkergehäusehälfte angebracht ist.

Eine in der Zeichnung schematisch dargestellte Rückstellfeder 26, die sich an der unterdruckseitigen Stirnwand des Verstärkergehäuses 1 an einem nicht gezeigten Flansch abstützt, hält die bewegliche Wand 2 in der gezeigten Ausgangsstellung. Außerdem ist eine zweite Druckfeder 27 vorgesehen, die einerseits an der Betätigungsstange 7 und andererseits am Haltering 21 abgestützt ist und deren Kraft für eine Vorspannung des Ventilkolbens 9 bzw. seines Ventilsitzes 16 gegenüber dem Ventilkörper 10 sorgt.

Um die Arbeitskammer 3 bei der Betätigung des Steuerventils 12 mit der Atmosphäre verbinden zu können, ist schließlich im Steuergehäuse 5 ein annähernd radial verlaufender Kanal 29 ausgebildet. Die Rückkehrbewegung des Ventilkolbens 9 am Ende eines Bremsvorganges wird dabei durch ein Querglied 11 begrenzt, das in der in der Zeichnung gezeigten Lösestellung des Unterdruckbremskraftverstärkers an einem im Verstärkergehäuse 1 ausgebildeten Anschlag 38 anliegt.

Um eine von der Betätigungsstange 7 unabhängige Fremdbetätigung des erfindungsgemäßen Unterdruckbremskraftverstärkers einzuleiten ist radial zwischen dem ersten (15) und dem zweiten Dichtsitz 16 ein dritter Dichtsitz 24 vorgesehen, der mittels eines Elektromagneten 20 betätigbar ist, der vorzugsweise in einer axialen topfförmigen Verlängerung 25 des Ventilkolbens 9 angeordnet ist und demnach zusammen mit dem Ventilkolben 9 im Steuergehäuse 5 verschiebbar ist. Der Elektromagnet 20 besteht aus einer innerhalb der Verlängerung 25 angeordneten Spule 46 sowie einem darin verschiebbar angeordneten zylindrischen Anker 31, der einerseits innerhalb der Spule 46 und andererseis in einem die Verlängerung 25 verschließenden Verschlußteil 30 geführt wird. Eine Übertragung der vom Elektromagneten 20 aufgebrachten Fremdbetätigungskraft auf den dritten Dichtsitz 24 erfolgt mittels einer Kraftübertragungshülse 33, die am Anker 31 axial abgestützt ist und deren dem Anker 31 abgewandtes Ende den Dichtsitz 24 bildet.

Zwischen dem Ventilkolben 9 und der Kraftübertragungshülse 33 ist eine Druckfeder 40 angeordnet, die den Anker 31 in seiner Ausgangslage hält, in der der dritte Dichtsitz 24 gegenüber dem am Ventilkolben 9 ausgebildeten zweiten Dichtsitz 16 axial versetzt angeordnet ist. Das im Steuergehäuse 5 geführte Verschlußteil 30 liegt unter Zwischenschaltung einer Übersetzungscheibe 61 an der vorhin erwähnten Reaktionsscheibe 6 an und ermöglicht eine Übertragung der an der Betätigungsstange 7 eingeleiteten Eingangskraft auf die Reaktionsscheibe 6.

Bei der in der Zeichnung dargestellten Ausführung des erfindungsgemäßen Unterdruckbremskraftverstärkers sind schließlich elektrische Schaltmittel 55, 56 vorgesehen, die insbesondere bei Bremsvorgängen wichtig sind, bei denen zusätzlich zur Fahrerbetätigung der Elektromagnet 20 angesteuert wird, um unabhängig vom Fahrerwillen eine Vollbremsung herbeizuführen (sog. Bremsassistentfunktion). Dabei ist von besonderer Bedeutung, daß die Schaltmittel 55, 56 bei jeder Bremsung betätigt werden. Gleichzeitig muß gewährleistet werden, daß der Elektromagnet 20 nach Beendigung des fremdkraftunterstützten Bremsvorganges sicher abgeschaltet wird. Die gezeigten Schaltmittel bestehen dabei aus einem vorzugsweise am Ventilkolben 9 befestigten, zwei Schaltstellungen aufweisenden Mikroschalter 55 sowie einem den Mikroschalter 55 durch eine translatorische Bewegung betätigenden Betätigungselement 56, das in einer im Steuergehäuse 5 bzw. 67 vorgesehenen Bohrung abgedichtet geführt ist und mit einem verstärkergehäusefesten Anschlag. zusammenwirkt, der das Bezugszeichen 58 trägt und beispielsweise durch einen radialen Kragen der hinteren Verstärkergehäuseschale gebildet sein kann. Zwischen dem Betätigungselement 56 und dem Steuergehäuse 5 bzw. 67 ist eine Druckfeder 57 angeordnet, so daß das dem Mikroschalter 55 abgewandte Ende des Betätigungselements 56 unter einer Vorspannung am Anschlag 58 anliegt. Dabei ist es besonders vorteilhaft, wenn das Betätigungselement 56 durch zwei teleskopartig ineinander geführte Teile 59, 60 gebildet ist, die mittels einer zweiten Druckfeder 66 axial auseinander gedrückt werden. Das am Anschlag 58 anliegende Teil 59 besteht aus einem Betätigungsstößel, dessen Bewegung im Steuergehäuse 5 bzw. 67 mittels eines radialen Bundes 64 begrenzt wird, der mit einem im Steuergehäuse 5 bzw. 67 vorgesehenen Sprengring 65 zusammenwirkt. Das der Betätigung des Mikroschalters 55 dienende zweite Teil 60 ist in der Gestalt einer auf dem Betätigungsstößel 59 geführten, die zweite Druckfeder 66 aufnehmenden Hülse ausgeführt.

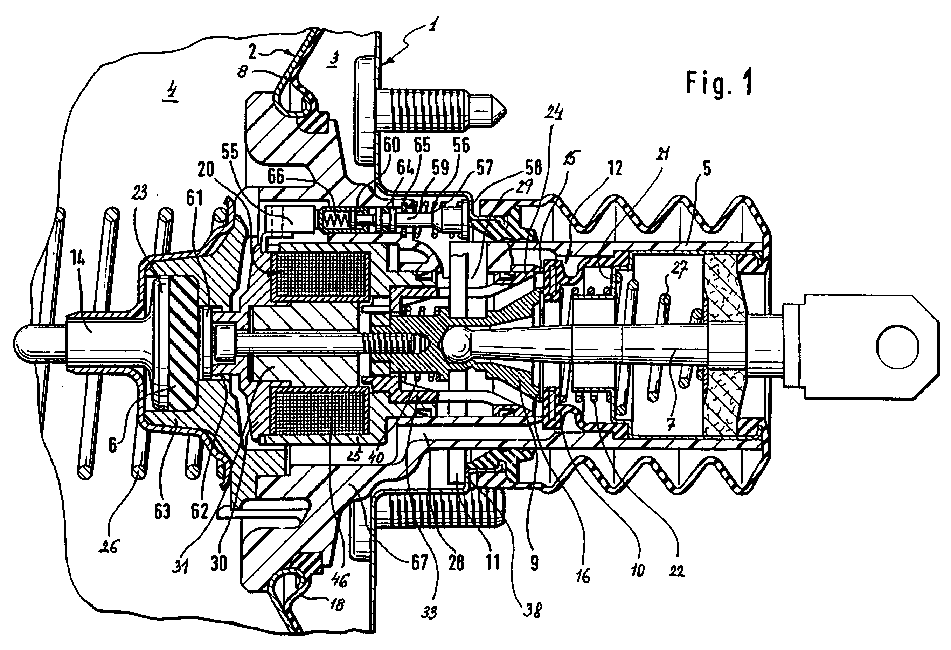

Wie der Fig. 1 schließlich zu entnehmen ist, ist das Steuergehäuse 5 der darin abgebildeten Verstärkerausführung zweiteilig ausgebildet und besteht aus einem im Verstärkergehäuse geführten, das Steuerventil 12 einschließlich des Elektromagneten 20 aufnehmenden Führungsteil 67, sowie einem mit dem Führungsteil 67 formschlüssig verbundenen Vorderteil 63. Die vorhin erwähnte Übersetzungsscheibe 61 ermöglicht eine Addition der durch den Ventilkolben 9 vom Fahrer eingeleiteten Betätigungskraft zu der von der beweglichen Wand 2 aufgebrachten Verstärkungskraft. Die Bewegung der Übersetzungsscheibe 61 entgegen der Betätigungsrichtung wird durch eine im Vorderteil 63 ausgebildete Anschlag- bzw. Ringfläche 62 begrenzt, so daß bei Bedarf eine weitere Bewegung des Ventilkolbens 9 entgegen der Betätigungsrichtung möglich ist.

In der Lösestellung des erfindungsgemäßen Unterdruckbremskraftverstärkers nehmen seine Einzelteile die in Fig. 1 gezeigte Position ein. Durch die Anlage des Betätigungsstößels 59 am Anschlag 58 wird die Druckfeder 57 leicht zusammengedrückt, so daß zwischen dem Bund 64 und dem Sprengring 65 ein axialer Abstand bzw. Spiel vorhanden ist. Der Mikroschalter 55, der sich in seiner ersten Schaltstellung befindet, stützt sich an der Hülse 60 axial ab. Das Steuergehäuse 5 bzw. 67 sowie der Ventilkolben 9 schlagen über das Querglied 11 am Verstärkergehäuse an, während das Verschlußteil 30 des Ventilkolbens 9 an der Übersetzungsscheibe 61 anliegt, die ihrerseits sich im Abstand sowohl von der Anschlag- bzw. Ringfläche 62 als auch der Reaktionscheibe 6 befindet.

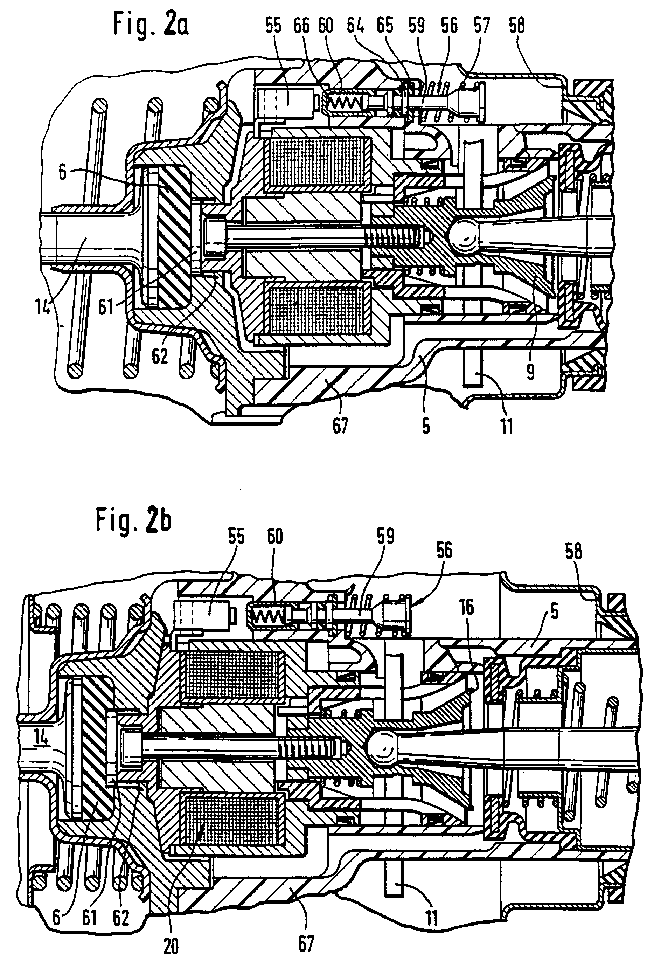

Wird nun vom Fahrer durch Betätigung des Ventilkolbens 9 eine Normal-(Teil-)Bremsung eingeleitet, so hebt der Ventilkolben 9 vom Querglied 11 ab, während die Übersetzungsscheibe 61 mit der Reaktionsscheibe 6 in Berührung gebracht wird (siehe Fig. 2a). Durch die Relativbewegung zwischen Ventilkolben 9 und Steuergehäuse 5 bzw. 67 entfernt sich der Mikroschalter 55 vom Betätigungselement 56, wodurch er in seine zweite Schaltstellung umgeschaltet wird. Der Schaltzustand des Mikroschalters 55 wird einer nicht gezeigten Steuerelektronik gemeldet, die der Ansteuerung des Elektromagneten 20 dient. Die Meldung dient bei nicht betätigtem Elektromagneten 20 einer Überprüfung der einwandfreien Funktion der Schaltmittel 55, 56. Durch Entlasten der Druckfeder 57 wird der Betätigungsstößel 59 so weit zurückgestellt, bis dessen Bund 64 am Sprengring 65 zur Anlage kommt. Gleichzeitig werden der Betätigungsstößel 59 und die Hülse 60 durch die zweite Druckfeder 66 auf Anschlag auseinandergedrückt.

Die vom Fahrer eingeleitete Vollbremsstellung ist in Fig. 2b gezeigt. Da sich der Mikroschalter 55 nach wie vor im Abstand von seinem Betätigungselement 56 bzw. 60 befindet, erfolgt keine Änderung seines Schaltzustandes, so daß er in der zweiten Schaltstellung verharrt. In der Vollbremsstellung kommt es lediglich zu einer Vergrößerung des Abstandes zwischen den Schaltmitteln 55, 56, wobei die Übersetzungsscheibe 61 in die gummielastische Reaktionsscheibe 6 hineingedrückt wird.

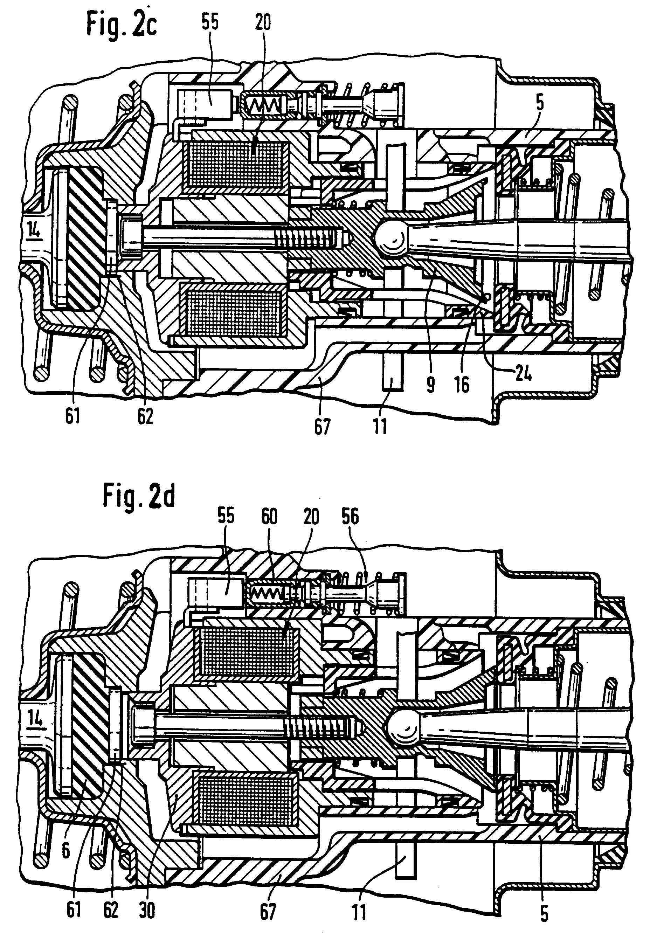

Fig. 2c zeigt eine Vollbremsstellung durch schnelle Fahrerbetätigung, die bei gleichzeitiger Ansteuerung des Elektromagneten 20 durch die nicht gezeigte Elektronik eingeleitet wurde. Durch die Relativbewegung des Ventilkolbens 9 gegenüber dem Steuergehäuse 5 bzw. 67 erfolgt ein Umschalten des Mikroschalters 55 in seine zweite Schaltstellung, das ein Aktivieren des Elektromagneten 20 ermöglicht. Durch die zusätzliche, durch weiteres Öffnen des am Ventilkolben 9 ausgebildeten (Atmosphären-)Dichtsitzes 16 auf Grund der Betätigung des dritten Dichtsitzes 24 bedingte Belüftung der Arbeitskammer 3 erfolgt ein Vorfahren des Steuergehäuses 5 gegenüber dem Ventilkolben 9, während dessen das Querglied 11 sich in einer Zwischenstellung befindet, in der keine Berührung zwischen ihm und dem Steuergehäuse 5 bzw. 67 stattfindet. Durch die Wirkung einer auf die Druckstange 14 einwirkenden Reaktionskraft wird die Reaktionsscheibe 6 in die die Übersetzungsscheibe 61 aufnehmende Ausnehmung im Steuergehäuse-Führungsteil 67 so lange hineingedrückt, bis die Übersetzungsscheibe 61 an der Ringfläche 62 anschlägt. Durch den Anschlag der Übersetzungsscheibe 61 wird die Übertragung der Reaktionskraft auf den Ventilkolben 9 verhindert, so daß am Betätigungs- bzw. Bremspedal keine Reaktionskraft mehr spürbar ist.

Bei einem langsam verlaufenden Lösevorgang (Wegnahme der Betätigungskraft) erfolgt ein Umschalten des Mikroschalters 55 erst bei Anlage des Betätigungselementes 56 bzw. 59 am Anschlag 58 (Fig. 1.)

Bei schnell verlaufendem Lösevorgang bzw. einer Wegnahme der Betätigungskraft während einer durch Ansteuern des Elektromagneten 20 eingeleiteten Vollbremsung (Fig. 2d) erfolgt ein Umschalten des Mikroschalters 55 in die erste Schaltstellung durch seine Anlage am Betätigungselement 56 bzw. 60. Der Umschaltvorgang wird der bereits erwähnten Elektronik gemeldet, die ein Steuersignal erzeugt, das ein Abschalten des Elektromagneten 20 zur Folge hat. Das Steuergehäuse 5 bzw. 67 wird von dem daran anliegenden Querglied 11 mitgenommen, während die Übersetzungsscheibe 61 durch das fließende Material der Reaktionsscheibe 6 gegen die Anschlag- bzw. Ringfläche 62 gedrückt wird. Der axiale Abstand zwischen dem Ende des Ventilkolbens 9 bzw. 30 und der Übersetzungsscheibe 61 entspricht dem Lösehub, der für den Lösevorgang des Bremsgerätes aus der durch den Elektromagneten 20 eingesteuerten Vollbremsung erforderlich ist.

### Bezugszeichenliste:

- 1: Verstärkergehäuse
- 2: bewegliche Wand
- 3: Arbeitskammer
- 4: Unterdruckkammer
- 5: Steuergehäuse
- 6: Reaktionsscheibe
- 7: Betätigungsstange
- 8: Membranteller
- 9: Ventilkolben
- 10: Ventilkörper
- 11: Querglied
- 12: Steuerventil
- 13:
- 14: Druckstange
- 15: Dichtsitz
- 16: Dichtsitz
- 17:
- 18: Rollmembran
- 19:
- 20: Elektromagnet
- 21: Haltering
- 22: Ventilfeder
- 23: Kopfflansch
- 24: Dichtsitz
- 25: Verlängerung
- 26: Rückstellfeder
- 27: Kolbenstangenrückholfeder
- 28: Kanal
- 29: Kanal
- 30: Verschlußteil
- 31: Anker
- 32:
- 33: Kraftübertragungshülse
- 34:
- 35:
- 36:
- 37:
- 38: Anschlag
- 39:
- 40: Feder
- 41:
- 42:
- 43:
- 44:
- 45:
- 46: Spule
- 47:
- 48:
- 49:
- 50:
- 51:
- 52:
- 53:
- 54:
- 55: Mikroschalter
- 56: Betätigungselement
- 57: Druckfeder
- 58: Anschlag
- 59: Betätigungsstößel
- 60: Hülse
- 61: Übersetzungsscheibe
- 62: Ringfläche
- 63: Vorderteil
- 64: Bund
- 65: Sprengring
- 66: Druckfeder
- 67: Führungsteil

## Patentansprüche

1. Unterdruckbremskraftverstärker für Kraftfahrzeuge mit einem Verstärkergehäuse (1), dessen Innenraum durch eine bewegliche Wand (2) in eine Unterdruckkammer (4) und eine Arbeitskammer (3) unterteilt ist, sowie mit einem die bewegliche Wand (22) tragenden Steuergehäuse (5), in dem ein eine auf die bewegliche Wand (2) einwirkende Druckdifferenz steuerndes Steuerventil (12) angeordnet ist, das mindestens zwei mit einem elastischen Ventilkörper (10) zusammenwirkende Dichtsitze (15,16,24) aufweist, und einerseits durch eine Betätigungsstange (7) und andererseits unabhängig von der Betätigungsstange (7) durch einen Elektromagneten (20) betätigbar ist, dessen Anker (31) kraftübertragend mit einem der Dichtsitze (15,16,24) zusammenwirkt, wobei elektrische Schaltmittel (55,56) vorgesehen sind, deren Steuersignale ein Abschalten der Stromzufuhr des Elektromagneten (20) ermöglichen, dadurch **gekennzeichnet**, daß die Schaltmittel (55,56) innerhalb des Verstärkergehäuses (1) angeordnet sind und durch eine Relativbewegung zwischen dem Ventilkolben (9) und dem Steuergehäuse (5) betätigbar sind.

2. Unterdruckbremskraftverstärker nach Anspruch 1, dadurch **gekennzeichnet**, daß die Schaltmittel (55,56) durch eine Relativbewegung zwischen dem Ventilkolben (9) und dem Steuergehäuse (5) betätigbar sind.

3. Unterdruckbremskraftverstärker nach Anspruch 2, dadurch **gekennzeichnet**, daß die Schaltmittel (55,56) durch einen am Ventilkolben (9) angeordneten Mikroschalter (55) sowie ein am bzw. im Steuergehäuse (5) angeordneten Betätigungselement (56) gebildet sind.

4. Unterdruckbremskraftverstärker nach Anspruch 3, dadurch **gekennzeichnet**, daß das Betätigungselement (56) gegenüber dem Steuergehäuse (5) relativ bewegbar und entgegen der Betätigungsrichtung federnd vorgespannt angeordnet ist.

5. Unterdruckbremskraftverstärker nach Anspruch 4, dadurch **gekennzeichnet**, daß das Betätigungselement (56) unter der Vorspannung einer Druckfeder (57) an einem verstärkergehäusefesten Anschlag (58) so anliegt, daß an seinem dem Mikroschalter (55) zugewandten Ende zwischen ihm und dem Steuergehäuse (5) ein axiales Spiel vorhanden ist.

6. Unterdruckbremskraftverstärker nach einem der Ansprüche 1 bis 5, dadurch **gekennzeichnet**, daß das Betätigungselement (56) durch zwei teleskopartig ineinander geführte, federnd vorgespannte Teile (59, 60) gebildet ist.

7. Unterdruckbremskraftverstärker nach Anspruch 6, dadurch **gekennzeichnet**, daß das Betätigungselement (56) durch einen im Steuergehäuse (5) abgedichtet geführten, mit dem Anschlag (58) zusammenwirkenden Betätigungsstößel (59) sowie einer am Betätigungsstößel (59) federnd vorgespannten, gefesselten, koaxial zum Betätigungstößel (59) angeordneten, mit dem Mikroschalter (55) zusammenwirkenden Hülse (60) gebildet ist.

## Claims

1. Vacuum brake power booster for automotive vehicles having a booster housing (1) whose interior is subdivided into a vacuum chamber (4) and a working chamber (3) by a movable wall (2), further including a control housing (5) carrying the movable wall (2) and accommodating a control valve (12) which controls the pressure differential tha acts upon the movable wall (2), the control valve including at least two sealing seats (15, 16, 24) which cooperate with an elastic valve member (10), and being operable by an actuating rod (7), on the one hand, and irrespective of the actuating rod (7) by an electromagnet (20), on the other hand, the armature (31) of the electromagnet being in a force-transmitting interaction with one of the sealing seats (15, 16, 24), wherein electrical switching means (55, 56) are provided and the control signals of which permit disconnecting the current supply to the electromagnet (20), **characterized** in that the switching means (55, 56) are arranged inside the booster housing (1) and operable by a relative movement between the valve piston (9) and the control housing (5).

2. Vacuum brake power booster as claimed in claim 1, **characterized** in that the switching means (55, 56) are operable by a relative movement between the valve piston (9) and the control housing (5).

3. Vacuum brake power booster as claimed in claim 2, **characterized** in that the switching means (55, 56) are formed of a microswitch (55) arranged on the valve piston (9) and an actuating element (56) which is mounted on or in the control housing (5).

4. Vacuum brake power booster as claimed in claim 3, **characterized** in that the actuating element (56) is movable relative to the control housing (5) and is resiliently biassed in opposition to the actuating direction.

5. Vacuum brake power booster as claimed in claim 4, **characterized** in that the actuating element (56) abuts a stop (58) on the booster housing, subjected to the preload of a compression spring (57) so that an axial clearance is provided between element (56) and the control housing (5) at its end close to the microswitch (55).

6. Vacuum brake power booster as claimed in any one of claims 1 to 5, **characterized** in that the actuating element (56) is formed of two resiliently preloaded parts (59, 60) which are telescopically guided in each other.

7. Vacuum brake power booster as claimed in claim 6, **characterized** in that the actuating element (56) is formed of an actuating tappet (59) which is sealed in the control housing (5) and cooperates with the stop (58), and a sleeve (60) which is resiliently preloaded on the actuating tappet (59), anchored, arranged coaxially to the actuating tappet (59) and cooperating with the microswitch (55).

## Revendications

1. Amplificateur d'effort de freinage à dépression pour véhicule automobile, comprenant un boîtier d'amplificateur (1), dont la cavité est divisée par une paroi mobile (2) en une chambre à dépression (4) et une chambre de travail (3), et un boîtier de commande (5) qui porte la paroi mobile (2) et dans lequel est disposée une valve de commande (12) qui commande une différence de pression s'exerçant sur la paroi mobile (2) et comporte au moins deux sièges d'étanchéité (15, 16, 24) coopérant avec un obturateur élastique (10) et qui peut être actionnée d'une part par une tige d'actionnement (7) et d'autre part, indépendamment de la tige d'actionnement (7), par un électro-aimant (20) dont l'armature mobile (31) coopère avec l'un des sièges d'étanchéité (15, 16, 24) d'une manière permettant de transmettre une force, tandis qu'il est prévu des moyens de commutation électrique (55, 56) dont les signaux de commande permettent une coupure de l'alimentation en courant de l'électro-aimant (20), caractérisé en ce que les moyens de commutation (55, 56) sont disposés à l'intérieur du boîtier d'amplificateur (1) et peuvent être actionnés au moyen d'un déplacement relatif entre le piston de valve (9) et le boîtier de commande (5).

2. Amplificateur d'effort de freinage à dépression suivant la revendication 1, caractérisé en ce que les moyens de commutation (55, 56) sont actionnés sous l'effet d'un déplacement relatif entre le piston de valve (9) et le boîtier de commande (5).

3. Amplificateur d'effort de freinage à dépression suivant la revendication 2, caractérisé en ce que les moyens de commutation (55, 56) sont constitués d'un micro-interrupteur (55), disposé sur le piston de valve (9), et d'un élément d'actionnement (56) disposé sur ou dans le boîtier de commande (5).

4. Amplificateur d'effort de freinage à dépression suivant la revendication 3, caractérisé en ce que l'élément d'actionnement (56) est disposé d'une manière mobile par rapport au boîtier de commande (5) et est soumis à une précontrainte élastique dans le sens opposé au sens d'actionnement.

5. Amplificateur d'effort de freinage à dépression suivant la revendication 4, caractérisé en ce que l'élément d'actionnement (56) est appliqué en appui, sous la précontrainte exercée par un ressort de compression (57), sur une butée (58) fixe par rapport au boîtier d'amplificateur, de façon telle qu'un jeu axial existe, à son extrémité tournée vers le micro-interrupteur (55), entre lui-même et le boîtier de commande (5).

6. Amplificateur d'effort de freinage à dépression suivant l'une des revendications 1 à 5, caractérisé en ce que l'élément d'actionnement (56) est constitué de deux parties (59, 60) montées de manière télescopique l'une dans l'autre et soumises à une précontrainte élastique.

7. Amplificateur d'effort de freinage à dépression suivant la revendication 6, caractérisé en ce que l'élément d'actionnement (56) est constitué d'une tige-poussoir d'actionnement (59), guidée de manière étanche dans le boîtier de commande (5) et coopérant avec la butée (58), et d'un manchon (60) qui est disposé sur la tige poussoir d'actionnement (59), coaxialement à cette tige poussoir d'actionnement (59), d'une manière inséparable et en étant soumis à une précontrainte élastique et qui coopère avec le micro-interrupteur (55).
